# EUROPÄISCHE PATENTSCHRIFT

(11) **EP 3 078 871 B1**
(45) Veröffentlichungstag und Bekanntmachung des Hinweises auf die Patenterteilung: **20.06.2018**
(21) Anmeldenummer: 16161497.9
(22) Anmeldetag: 16.01.2013
(51) Int. Cl.: F16D 3/62

(54) **ELASTISCHE DOPPEL-TORSIONSKUPPLUNG**
ELASTIC DOUBLE TORSIONAL COUPLING
COUPLAGE DE TORSION DOUBLE ELASTIQUE

(30) Priorität: 10.02.2012 DE 102012002660
(43) Veröffentlichungstag der Anmeldung: 12.10.2016
(62) Teilanmeldung aus: 15000952.0
(73) Patentinhaber: ZF Friedrichshafen AG, 88046 Friedrichshafen (DE)
(72) Erfinder: SOMSCHOR, Bernd, 88069 Tettnang (DE); SACHER, Chistoph, 88048 Friedrichshafen (DE); SPAAN, Wolfgang, 84559 Kraiburg (DE); ROTHE, Joachim, 84453 Mühldorf am Inn (DE)

(56) Entgegenhaltungen:
- EP-A1- 0 162 141
- DE-A1- 3 526 273
- DE-A1- 4 001 145
- JP-A- S6 334 325
- US-A- 4 019 346

## Beschreibung

Die Erfindung betrifft eine elastische Doppel-Torsions-kuppling für Schienfeahrzeuge und dort zum antriebsseitigen Einsatz, mit
a) einer ersten Torsionskupplung, die ihrerseits aufweist:
   aa) einen ersten Verbindungsflansch zur Verbindung mit einer drehmomentenerzeugenden Kraftquelle;
   ab) eine Vielzahl von Laschen, die jeweils in einem Endbereich mit dem ersten Verbindungsflansch verbunden sind;
b) einer zweiten Torsionskupplung, die ihrerseits aufweist:
   ba) einen zweiten Verbindungsflansch zur Verbindung mit einer angetriebenen Welle oder dergleichen;
   bb) eine Vielzahl von Laschen, die jeweils in einem Endbereich mit dem zweiten Verbindungsflansch verbunden sind;
c) einem Zwischenstück, welches die erste Torsions ¬ kupplung mit der zweiten Torsionskupplung verbindet und mit dem jeweils der andere Endbereich der Laschen verbunden ist.

Elastische, nicht schaltbare Torsionskupplungen werden zum Zwecke der Drehmomenten-übertragenden Verbindung zwischen zwei Wellenanschlüssen verbaut. Ihr Sinn besteht neben der Drehmomentenübertragung in der Schwingungsiso ¬ lierung und akkustischen Abkopplung der beiden Wellen voneinander. Elastische Torsionskupplungen sind beispiels ¬ weise in der DE 37 34 089 A1, der DE 43 042 74 CI oder auch der DE 10 2008 047 596 A1 beschrieben.

Ferner ist aus der DE 35 26 273 A1 eine Doppel-Torsionskupplung für den Einsatz in Schienenfahrzeugen bekannt, mit einer ersten und einer zweiten Torsionskupplung, die jeweils einen Verbindungsflansch und eine Vielzahl von Laschen aufweisen, sowie einem Zwischenstück, welches die erste Torsionskupplung mit der zweiten Torsionskupplung verbindet und mit dem jeweils ein Endbereich der Laschen verbunden ist.

Ein bevorzugtes Einsatzgebiet von elastischen Doppel-Torsionskupplungen der eingangs genannten Art sind Schie¬ nenfahrzeuge. Dort werden zwei unterschiedliche Positionen unterschieden, in denen Kupplungen montiert werden. Die erste Position, die üblicherweise als "antriebsseitig" bezeichnet wird, ist die zwischen der Ausgangswelle des Elektromotors und der Eingangswelle des Getriebes. Die Drehzahlen der miteinander zu verbindenden Wellen sind an dieser Stelle sehr hoch und der zur Verfügung stehende Einbauraum ist verhältnismäßig knapp. Deshalb wurden hier bisher im Wesentlichen Bogenzahnkupplungen eingesetzt, die jedoch wartungsbedürftig sind, lange Montage- und Demontagezeiten erfordern und auf Grund ihrer Verzahnung in erheblichem Maße Geräusche entwickeln.

Die zweite Möglichkeit, Kupplungen in Schienenfahrzeugen zu positionieren, ist die zwischen der Ausgangswelle des Getriebes und dem angetriebenen Radwellensatz. Hier sind die Drehzahlen erheblich niedriger und es steht mehr Einbauraum zur Verfügung. Daher wurden an dieser Stelle schon bisher elastische Doppel Torsionskupplungen der eingangs genannten Art eingesetzt. Sie zeichnen sich durch ein verhältnismäßig geringes Gewicht, weitgehende Wartungsfreiheit, längere Standzeiten, gute kardanische Steifigkeit und geringeren Kosten in der Anschaffung und bei den LCC aus.

Bei diesen bekannten Doppel-Torsionskupplungen ist das die beiden Einzel-Torsionskupplungen miteinander verbindende Zwischenstück ein Rohr, durch das sich die angetrie ¬ bene Radsatzwelle hindurch erstreckt. Um den bei Fehlaus ¬ richtung der miteinander zu verbindenden Wellen eintreten ¬ den Beugewinkel nicht zu groß zu machen, haben diese rohrartigen Zwischenstücke eine nicht unerhebliche axiale Länge. Auf Grund ihrer Abmessungen wurden derartige Doppel-Torsionskupplungen bisher antriebsseitig nicht eingesetzt.

Aufgabe der vorliegenden Erfindung ist es, eine elastische Doppel-Torsionskupplung zu schaffen, die sich grundsätzlich auch zum antriebsseitigen Einbau in Schienenfahrzeugen eignet.

Aufgabe der vorliegenden Erfindung ist es ferner, eine elastische Doppel-Torsionskupplung der eingangs genannten Art zu schaffen, bei welcher verhältnismäßig große Unter ¬ schiede in den axialen Abständen der miteinander zu verbindenden Wellen bewältigbar sind.

Diese Aufgabe wird erfindungsgemäß dadurch gelöst, dass das Zwischenstück auf gegenüberliegenden Seiten jeweils Aufnahmen mit einer achsparallelen Bohrung aufweist, in der jeweils ein Gleitstück in axialer Richtung beweg ¬ lich angeordnet ist, wobei die die Laschen befestigenden Bolzen jeweils an einem Gleitstück befestigt sind. Auf diese Weise können die beiden Torsionskupplungen, die zusammen die Doppel-Torsionskupplung bilden, in gewissem Umfang in axialer Richtung näher zusammengeschoben oder weiter auseinander gezogen werden, wie dies eben die Dimensionen der in den Aufnahmen des Zwischenstückes teleskopierenden Gleitstücke zulassen.

Besonders günstig ist es in diesem Falle, wenn jeder Aufnahme eine Feder zugeordnet ist, welche das Gleitstück aus dem Zwischenstück zu drücken sucht. Diese Bauwei¬ se stellt eine zentrische Anordnung des Zwischenstückes zwischen den beiden Torsionskupplungen sicher.

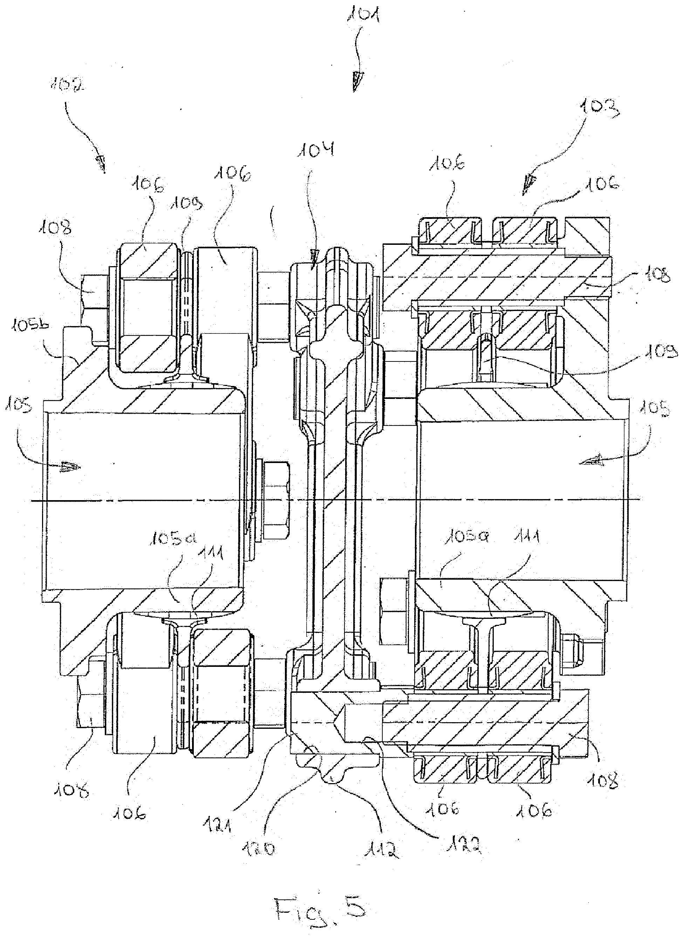

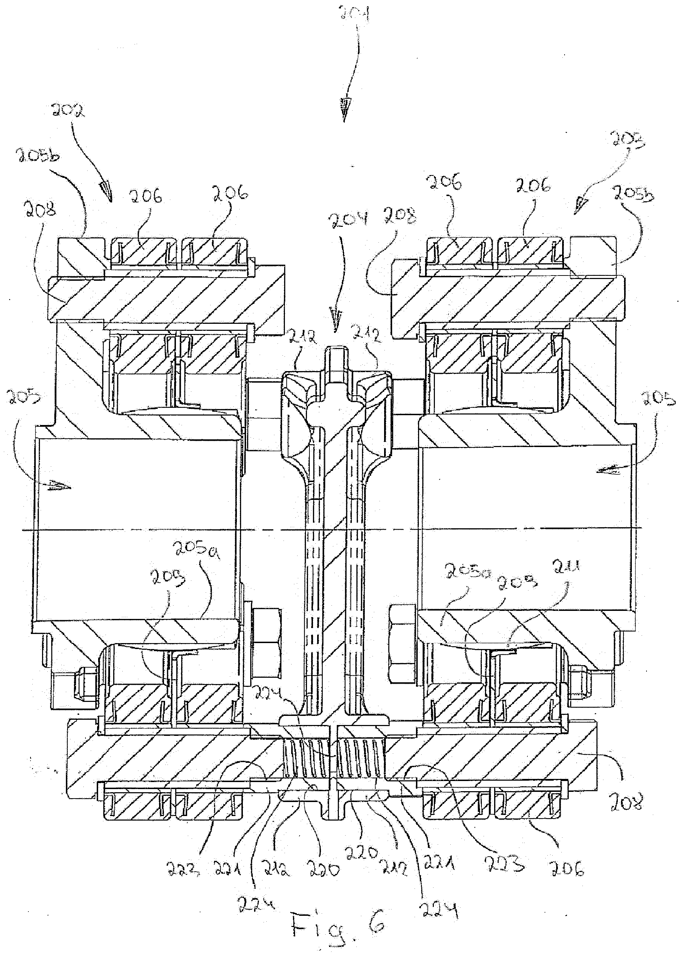

Ausführungsbeispiele der Erfindung werden in Fig. 5 und 6 anhand der Zeichnung näher erläutert; es zeigen
- Figur 1: perspektivisch eine elastische Doppel-Torsions ¬ kupplung, die bevorzugt zwischen der Ausgangswelle eines Elektromotors und einem Getriebe bei Schienenfahrzeugen angebracht wird;
- Figur 2: die Draufsicht auf die Doppel-Torsionskupplung von Figur 1;
- Figur 3: einen Schnitt gemäß Linie III-III von Figur 2;
- Figur 4: einen Schnitt gemäß Linie IV-IV von Figur 2;
- Figuren: 5 und 6 Schnitte, ähnlich der Figur 3, durch alternative Ausführungsformen einer elastischen Doppel-Torsionskupplung.

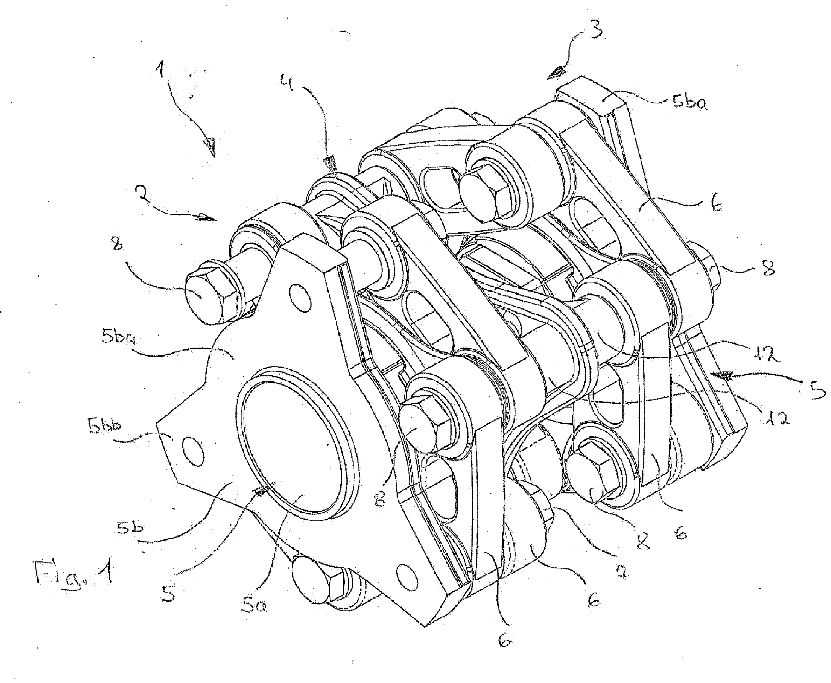

Zunächst wird auf die Figuren 1 bis 3 Bezug genommen, in denen eine elastische Doppel-Torsionskupplung dargestellt und insgesamt mit dem Bezugszeichen 1 gekennzeichnet ist. Sie eignet sich insbesondere zum Einsatz bei Schienenfahrzeugen und zwar "antriebsseitig". Unter "antriebsseitig" wird eine Position zwischen der Ausgangswelle eines Elektromotors und der Eingangswelle eines Getriebes verstanden. Diese Bezeichnung steht im Gegensatz zu "abtriebsseitig", worunter eine Anordnung einer Kupplung gemeint ist, die sich zwischen der Ausgangswelle des Getriebes und der angetriebenen Radsatzwelle befindet.

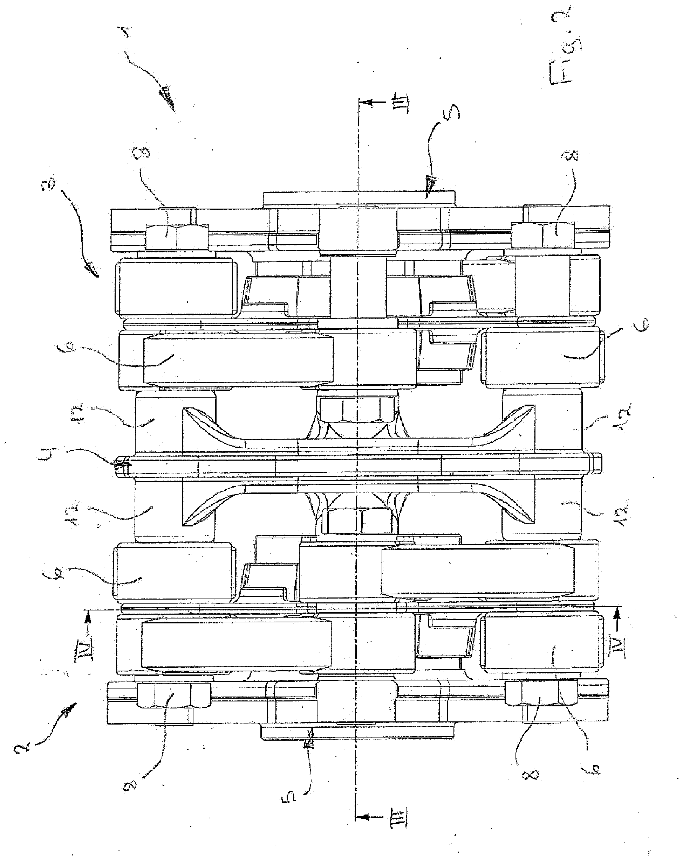

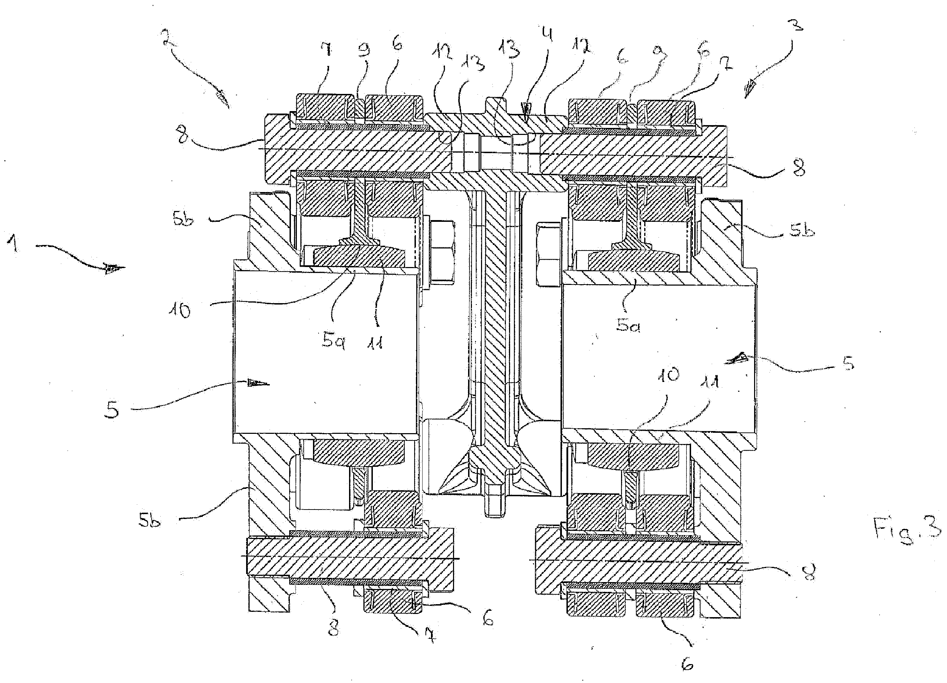

Die Doppel-Torsionskupplung 1 umfasst zwei im Wesentlichen identisch aufgebaute und spiegelbildlich zur Mittelebene der Doppel-Torsionskupplung 1 angeordnete Torsionskupplun ¬ gen 2 und 3, die durch ein Zwischenstück 4 miteinander drehschlüssig verbunden sind. Die weitere Beschreibung erfolgt zunächst anhand der in den Figuren 2 und 3 links gezeichneten Torsionskupplung 2. Diese ist im Wesentlichen baugleich mit der in den Figuren 2 und 3 rechts dargestell ¬ ten Torsionskupplung 3.

Die Torsionskupplung 2 besitzt einen Verbindungsflansch 5 mit einer rohrförmigen Nabe 5a und einem radial verlau ¬ fenden Flanschbereich 5b. Dieser wiederum ist einstückig aus einem Kreisringbereich 5ba und drei sich von diesem radial nach außen erstreckenden Armen 5bb zusammengesetzt. Die Arme 5bb schließen miteinander einen Winkel von 120° ein.

An jedem der Arme 5bb sind zwei Laschen 6 mittels eines Bolzens 8 befestigt. Die Laschen 6 können grundsätzlich von jeder beliebigen Bauart sein, sofern sie nur die für die Dämpfung erforderlichen elastischen Eigenschaften besitzen. Bevorzugt werden jedoch solche Laschen 6,
(weiter auf Seite 9 der ursprünglich eingereichten Unterlagen)
die einen elastomeren Körper umfassen, in welchen ein kräfteübertragendes Fadenpaket eingebettet ist. Die prinzipielle Bauweise einer derartigen Lasche 6 ist beispielsweise in der DE 35 26 273 C3 beschrieben, worauf Bezug genommen wird. Jede Lasche 6 besitzt zwei als Befestigungselemente dienende, von der einen zur anderen Stirnseite gehende Buchsen 7, die als Verschraubungspunkte dienen.

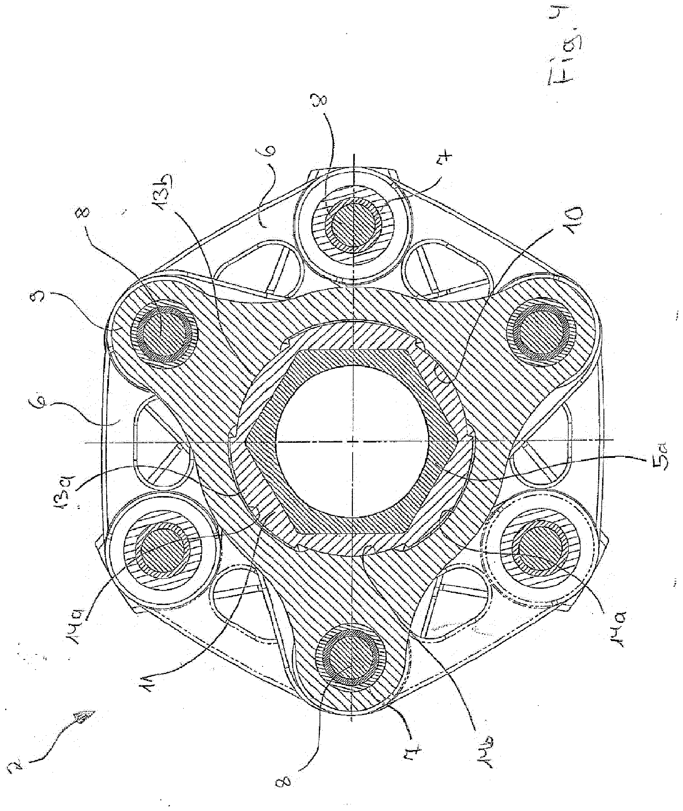

Im Einzelnen ist die Anordnung der Laschen 6 Folgende:
Beginnt man mit der Beschreibung an dem in Figur 4 rechts oben liegenden Bolzen 8, der dem Bolzen 8 links oben in Figur 3 entspricht, so erkennt man, dass durch diesen zwei Laschen 6 an dem Zwischenstück 4 befestigt sind, die sich in Umfangsrichtung in entgegengesetzte Richtungen erstrecken. Die gegenüberliegenden Endbereiche dieser Laschen 6 sind mit weiteren Bolzen 8, welche dem Bolzen 8 links unten in Figur 3 entsprechen, mit einem Arm 5bb des Verbindungsflansches 5 verbunden. Diese Folge von Laschen 6, die abwechselnd einen Arm 5bb des Verbindungsflansches 5 mit dem Zwischenstück 4 und umgekehrt verbinden, setzt sich über den gesamten Umfang der Torsionskupplung 2 fort. Die dargestellte Torsionskupplung 2 besitzt auf diese Weise insgesamt sechs solcher Laschen 6, die zusammen ein regelmäßiges Sechseck aufspannen, wobei an den Ecken des Sechseckes jeweils die Befestigungspunkte liegen.

Die beiden Laschen 6, die in einem dieser Befestigungspunkte nebeneinander liegen, werden durch einen schmalen Zwischenflansch 9 voneinander getrennt, der im radial innenliegenden Bereich eine Durchgangsöffnung 10 besitzt. Mit dem Rand dieser Durchgangsöffnung 10 liegt der Zwischenflansch 9 auf einer balligen Außenfläche eines Ringteiles 11 auf, das seinerseits auf dem in Richtung auf das Zwischenstück 4 weisenden, inneren Abschnitt der Nabe 5a des Verbindungsflansches 5 befestigt ist.

Das Zwischenstück 4 zwischen den beiden Torsionskupplungen 2 und 3 hat in der Seitenansicht die grobe Form eines Dreieckes, wobei die Ecken so positioniert sind, dass sie winkelmäßig gegenüber den Armen 5bb des Verbindungsflansches um 60° verdreht sind. Diese Verhältnisse werden besonders aus Figur 4 deutlich. Im Bereich dieser Ecken besitzt das Zwischenstück 4, das im Übrigen die Form einer schmalen Platte besitzt, jeweils zwei Aufnahmen 12. Die Aufnahmen 12 erstrecken sich von dem mittleren plattenförmigen Bereich des Zwischenstückes 4 in entgegengesetzte Richtungen auf die Torsionskupplungen 2, 3 zu und enthalten jeweils eine Gewindebohrung 13, in welche jeweils ein zwei Laschen 6 haltender Bolzen 8 eingeschraubt ist. Auf diese Weise wird also eine Drehverbindung zwischen den beiden Torsionskupplungen 2, 3 hergestellt.

Durch die achsparallele Dimension des Zwischenstückes 4 im Bereich der Aufnahmen 12 wird ein bestimmter Abstand zwischen den beiden Torsionskupplungen 2, 3 vorgegeben. Dieser wird so gewählt, dass die Laschensätze jeder Torsionskupplung 2, 3 zu Reparaturzwecken entnommen werden können, ohne dass die gesamte Torsionskupplung 2, 3 aus ihrem Einsatzort am Schienenfahrzeug demontiert werden müsste. Hierzu werden die Bolzen 8 so weit zurückgeschraubt, bis sie keinen Eingriff in die Gewindebohrungen 13 des Zwischenstückes 4 bzw. der Arme 5bb des Verbindungsflansches 5 mehr besitzen. Dann kann das Zwischenstück 4 seitlich herausgenommen werden. In den nunmehr freigewordenen Raum können die Laschensätze der beiden Torsionskupplungen 2, 3 nacheinander eingeführt und ebenfalls seitlich herausgenommen werden. Die reparierten oder erneuerten Laschensätze werden in umgekehrter Weise in die Torsionskupplungen 2, 3 wieder eingeführt. So dann wird das Zwischenstück 4 an seinen Platz gebracht und durch die Bolzen 8 dort gesichert.

In Figur 4 ist noch eine Besonderheit der beschriebenen Torsionskupplung 2 dargestellt. Sie zeigt einen Radialschnitt durch die Torsionskupplung 2 im Bereich des Zwischenflansches 9. Ausgehend von der Mitte erkennt man zunächst die Nabe 5a des Anschlussflansches 5, deren Aussenkontur im dargestellten Ausführungsbeispiel im Querschnitt sechseckig ist. Auf diese sechsflächige Nabe 5a ist mit einer komplementären Innenöffnung das Ringteil 11 aufgeschoben, an dem sich der Zwischenflansch 9, wie oben erläutert, abstützt.

Die Außenkontur des Ringteils 11 ist im Querschnitt nicht exakt kreisförmig, sondern setzt sich aus kreisbogenförmigen Abschnitten 13a mit größerem Radius und kreisbogenförmigen Abschnitten 13b mit kleinerem Radius zusammen.

In ähnlicher Weise ist auch die Durchgangsöffnung 10 des Zwischenflansches 9 im Querschnitt nicht exakt kreisförmig, sondern setzt sich aus Abschnitten 14a mit kleinerem Radius und Abschnitten 14b mit größerem Radius zusammen. Wie Figur 4 deutlich macht, erstrecken sich die Abschnitte 13a des Ringteils 11, die im Querschnitt den größeren Radius aufweisen, in die Abschnitte 14a mit größerem Radius des Zwischenflansches 9 hinein.

Wären die Bogenlängen der Bereiche 13a und 14a identisch, würde auf diese Weise eine drehschlüssige Verbindung zwischen dem Zwischenflansch 9 und dem Ringteil 11 erhalten. Tatsächlich aber ist die Bogenlänge der Abschnitte 14a des Zwischenflansches 9 größer als die Bogenlänge der Abschnitte 13a des Ringteiles 11. Dies bedeutet, dass sich der Zwischenflansch 9 gegenüber der Nabe 5a aus einer dargestellten mittleren Position in beide Richtungen um einen gewissen, kleinen Winkel verdrehen kann.

Damit hat es folgende Bewandnis: Solange die Kraftübertragung von dem Zwischenteil 4 auf den Verbindungsflansch 5 über die Laschen 6 erfolgt, diese also intakt sind, verdreht sich der Zwischenflansch 9 niemals so weit, bis der oben angesprochene Winkel, der auf die unterschiedlichen Bogenlängen der Abschnitte 13a, 14a zurückgeht, aufgebraucht ist. Die Elastizität der Laschen 6 kann in vollem Umfange für den gewünschten Dämpfungseffekt genutzt werden. Brechen nunmehr aber eine oder mehrere der Laschen 6, so verdreht sich der Zwischenflansch 9 gegenüber der Nabe 5a weiter, als dies bei intakten Laschen 6 möglich wäre. Im Verlauf dieser Verdrehung stoßen nunmehr die radial verlaufenden Stufen zwischen den Bereichen größeren und kleineren Durchmessers des Ringteiles 11 an den radial verlaufenden Stufen zwischen den Bereichen größeren und kleineren Durchmessers der Innenöffnung 10 des Zwischenflansches 9 an, und unterbinden eine weitere Verdrehung. Auf diese Weise ist trotz des Ausfalls der Laschen 6 eine Drehmomentenübertragung möglich, allerdings ohne den Dämpfungseffekt zu erzielen.

Die "normale" Funktionsweise der oben beschriebenen Doppel-Torsionskupplung 1 ist wie folgt:
Es sei angenommen, dass an den Verbindungsflansch 5 der Torsionskupplung 2 die Ausgangswelle des nicht dargestellten Elektromotors drehschlüssig angekoppelt ist. Der Verbindungsflansch 5 nimmt über die Arme 5bb und die Bolzen 8 die Laschen 6 in ihrer Drehbewegung mit. Da die Laschen 6 mit ihrem anderen Endbereich mit dem Zwischenstück 4 verbunden sind, wird auch dieses in Drehung versetzt. Diese Drehung überträgt sich auf die mit den Aufnahmen 12 des Zwischenstücks 4 verbundenen Laschen 6 der zweiten Torsionskupplung 3. Hierdurch werden alle Laschen 6 der Torsionskupplung 3 in Drehung versetzt, was sich schließlich wieder über die Bolzen 8 auf den Verbindungsflansch 5 der Torsionskupplung 3 überträgt.

Auf Grund der Abstüzung der Zwischenflansche 9 auf den Ringteilen 11 bleiben die Befestigungspunkte der Laschengerüste auch bei hohen Drehzahlen korrekt positioniert. Beugewinkel, die beispielsweise durch einen Versatz der an der Torsionskupplung 2 angeschlossenen Welle und der an der Torsionskupplung 3 angeschlossenen Welle entstehen können, können durch die ballige Form des Ringteiles 11 gut aufgenommen werden, da der Rand der Innenöffnung 10 der Zwischenflansche 9 auf der balligen Außenfläche des Ringteiles 11 entsprechend gleiten kann.

Das Zwischenstück 4, welches ein rohrförmiges Verbindungsstück beim Stand der Technik ersetzt, baut nicht nur in Axialrichtung verhältnismäßig kurz, sondern besitzt auch ein vergleichsweise geringes Gewicht. Dies ist bei den hohen Drehzahlen, denen eine antriebsseitig eingebaute Torsionskupplung unterworfen ist, von besonderer Bedeutung.

Das in Figur 5 dargestellte zweite Ausführungsbeispiel einer erfindungsgemäßen Doppel-Torsionskupplung ähnelt dem oben anhand der Figuren 1 bis 4 beschriebenen stark.

Entsprechende Teile sind daher mit demselben Bezugszeichen zuzüglich 100 gekennzeichnet. Die nachfolgende Beschreibung beschränkt sich auf die Unterschiede zwischen den beiden Ausführungsbeispielen.

Anders als beim ersten Ausführungsbeispiel der Figuren 1 bis 4 befinden sich die Aufnahmen 112 des Zwischenstückes 104 nicht einander gegenüberliegend auf gegenüberliegenden Seiten des Zwischenstückes 104. In eine Durchgangsbohrung 120 jeder Aufnahme 112 ist ein kreiszylindrisches Gleitstück 121 eingeschoben, das seinerseits koaxial eine innere Gewindebohrung 122 aufweist. In diese Gewindebohrung 122 ist nun jeweils ein zwei Laschen 106 befestigender Bolzen 108 eingeschraubt.

Die beschriebene Art der Verbindung der beiden Torsionskupplungen 102, 103 macht es möglich, dass unterschiedliche Abstände der miteinander zu verbindenden Wellen in Axialrichtung in erheblichem Umfange kompensiert werden können: Je nach diesem Abstand tauchen die Gleitstücke 121 mehr oder weniger tief in die Durchgangsbohrungen 120 der Aufnahmen 112 des Zwischenstückes 104 ein. Im Übrigen verläuft die Übertragung von Drehmomenten von der einen Torsionskupplung 102 auf die andere Torsionskupplung 103 in der oben für das erste Ausführungsbeispiel schon beschriebenen weise.

Figur 6 zeigt ein drittes Ausführungsbeispiel einer Doppel-Torsionskupplung, die erneut große Ähnlichkeit mit den oben schon beschriebenen Ausführungsformen besitzt. Teile, deren Funktion solchen des ersten Ausführungsbeispieles entsprechen, sind mit demselben Bezugszeichen zuzüglich 200 gekennzeichnet.

Das Zwischenstück 204, welches beim dritten Ausführungsbeispiel die Torsionskupplung 202 mit der Torsionskupplung 203 verbindet, stimmt insofern mit dem Zwischenstück 4 des ersten Ausführungsbeispieles überein, als diametral auf gegenüberliegenden Seiten des Zwischenstückes 4 Aufnahmen 212 vorgesehen sind. Jede dieser Aufnahmen 212 besitzt eine Sackbohrung 220, in welche jeweils ein hohlzylindrisches Gleitstück 221 eingeführt ist. In das Innengewinde 223 der Gleitstücke 221 sind von gegenüberliegenden Seite her jeweils Bolzen 208 eingeschraubt, von denen jeder der Befestigung von zwei Laschen 206 dienen.

Zwischen einem Steg 224 des Zwischenstückes 204, der die beiden Sackbohrungen 220 der Aufnahmen 212 voneinander trennt, und der Stirnseite der Bolzen 208 ist jeweils eine Druckfeder 225 unter Vorspannung eingesetzt. Diese Druckfedern 224 suchen die Torsionskupplungen 202, 203 soweit wie möglich auseinander zu drücken und sorgen dafür, dass das Zwischenstück 204 mittig zwischen den Torsionskupplungen 202, 203 verbleibt. Das Ausführungsbeispiel der Figur 6 besitzt im Grundsatz dieselbe Möglichkeit, axiale Abstandsänderungen zwischen den Enden der miteinander zu verbindenen Wellen zu kompensieren, wie das Ausführungsbeispiel der Figur 5.

## Patentansprüche

1. Elastische Doppel-Torsionskupplung für Schienenfahrzeuge und dort zum antriebsseitigen Einsatz zwischen der Ausgangswelle eines Elektromotors und der Eingangswelle eines Getriebes, mit
a) einer ersten Torsionskupplung (2), die ihrerseits aufweist:
aa) einen ersten Verbindungsflansch (5; 105; 205) zur Verbindung mit einer drehmomentenerzeugenden Kraftquelle;
ab) eine Vielzahl von Laschen (6; 106; 206), die jeweils in einem Endbereich mit dem ersten Verbindungsflansch (5; 105; 205) verbunden sind;
b) einer zweiten Torsionskupplung (3), die ihrerseits aufweist:
ba) einen zweiten Verbindungsflansch (5; 105; 205) zur Verbindung mit einer angetriebenen Welle oder dergleichen;
bb) eine Vielzahl von Laschen (6; 106; 206), die jeweils in einem Endbereich mit dem zweiten Verbindungsflansch (5; 105; 205) verbunden sind;
c) einem Zwischenstück (4; 104; 204), welches die erste Torsionskupplung (2) mit der zweiten Torsionskupplung (3) verbindet und mit dem jeweils der andere Endbereich der Laschen (6; 106; 206) verbunden ist;
**dadurch gekennzeichnet, dass**
das Zwischenstück (104; 204) auf gegenüberliegenden Seiten Aufnahmen (112; 212) mit achsparallelen Bohrungen (120; 220) aufweist, in denen jeweils ein Gleitstück (121; 221) in axialer Richtung beweglich angeordnet ist, wobei die die Laschen (106; 206) befestigenden Bolzen (108; 20) jeweils an einem Gleitstück (121; 221) befestigt sind.

2. Elastische Doppel-Torsionskupplung nach Anspruch 1, **dadurch gekennzeichnet, dass** jeder Aufnahme (212) eine Feder (224) zugeordnet ist, welche das Gleitstück (225) aus dem Zwischenstück (204) zu drücken sucht.

3. Elastische Doppel-Torsionskupplung nach Anspruch 1 oder 2, **dadurch gekennzeichnet, dass** die Laschen (6; 106; 206) einen elastomeren Körper umfassen, in welchen ein kräfteübertragendes Fadenpaket eingebettet ist.

## Claims

1. Elastic double torsional coupling for rail vehicles and, therein, for the drive-side use between the output shaft of an electric motor and the input shaft of a transmission, having
a) a first torsional coupling (2) which for its part has:
aa) a first connecting flange (5; 105; 205) for connecting to a torque-generating power source;
bb) a multiplicity of brackets (6; 106; 206) which are connected in each case in an end region to the first connecting flange (5; 105; 205);
b) a second torsional coupling (3) which for its part has:
ba) a second connecting flange (5; 105; 205) for connecting to a driven shaft or the like;
bb) a multiplicity of brackets (6; 106; 206) which are connected in each case in an end region to the second connecting flange (5; 105; 205);
c) an intermediate piece (4; 104; 204) which connects the first torsional coupling (2) to the second torsional coupling (3) and to which in each case the other end region of the brackets (6; 106; 206) is connected;
**characterized in that**,
on opposite sides, the intermediate piece (104; 204) has receptacles (112; 212) with axially parallel bores (120; 220), in which in each case one sliding element (121; 221) is arranged such that it can be moved in the axial direction, the bolts (108; 20) which fasten the brackets (106; 206) being fastened in each case to a sliding element (121; 221).

2. Elastic double torsional coupling according to Claim 1, **characterized in that** each receptacle (212) is assigned a spring (224) which attempts to press the sliding element (225) out of the intermediate piece (204) .

3. Elastic double torsional coupling according to Claim 1 or 2, **characterized in that** the brackets (6; 106; 206) comprise an elastomeric body, into which a force-transmitting thread bundle is embedded.

## Revendications

1. Double embrayage à torsion élastique pour véhicules ferroviaires destiné à être inséré côté entraînement entre l'arbre de sortie d'un moteur électrique et l'arbre d'entrée d'une boîte de vitesses, comprenant
a) un premier embrayage à torsion (2), qui présente pour sa part :
aa) une première bride de connexion (5 ; 105 ; 205) pour le raccordement à une source de force générant un couple de rotation ;
ab) une pluralité de pattes (6 ; 106 ; 206) qui sont connectées à chaque fois dans une région d'extrémité à la première bride de connexion (5 ; 105 ; 105) ;
b) un deuxième embrayage à torsion (3), qui présente pour sa part :
ba) une deuxième bride de connexion (5 ; 105 ; 205) pour le raccordement à un arbre entraîné ou similaire ;
bb) une pluralité de pattes (6 ; 106 ; 206) qui sont connectées à chaque fois dans une région d'extrémité à la deuxième bride de connexion (5 ; 105 ; 205) ;
c) une pièce intermédiaire (4 ; 104 ; 204) qui relie le premier embrayage à torsion (2) au deuxième embrayage à torsion (3) et à laquelle est raccordée à chaque fois l'autre région d'extrémité des pattes (6 ; 106 206) ;
**caractérisé en ce que**
la pièce intermédiaire (104 ; 204) présente sur des côtés opposés des logements (112 ; 212) avec des alésages d'axes parallèles (120 ; 220) dans lesquels est à chaque fois disposé un coulisseau (121 ; 221) déplaçable dans la direction axiale, les boulons (108 ; 20) fixant les pattes (106 ; 206) étant à chaque fois fixés à un coulisseau (121 ; 221).

2. Double embrayage à torsion élastique selon la revendication 1, **caractérisé en ce qu'**un ressort (224) est associé à chaque logement (212), lequel cherche à repousser le coulisseau (225) hors de la pièce intermédiaire (204).

3. Double embrayage à torsion élastique selon la revendication 1 ou 2, **caractérisé en ce que** les pattes (6 ; 106 ; 206) comprennent un corps élastomère dans lequel est noyé un paquet de fils de transfert de force.
